# EUROPÄISCHE PATENTSCHRIFT

(11) **EP 1 655 121 B1**
(45) Veröffentlichungstag und Bekanntmachung des Hinweises auf die Patenterteilung: **16.03.2011**
(21) Anmeldenummer: 05014568.9
(22) Anmeldetag: 05.07.2005
(51) Int. Cl.: B29C 41/46, B29C 41/18

(54) **Verfahren und Vorrichtung zur Herstellung von Kunststoff-Formfolien**
Process and apparatus for manufacturing shaped plastic sheets
Procédé et dispositif pour le formage de feuilles de plastique.

(30) Priorität: 09.11.2004 DE 102004054098
(43) Veröffentlichungstag der Anmeldung: 10.05.2006
(73) Patentinhaber: KIEFEL AG, 83395 Freilassing (DE)
(72) Erfinder: Huber, Anton, Dipl.-Ing., 5301 Eugendorf (AT); Gschwendtner, Rupert, 83435 Bad Reichenhall (DE); Hinterseer, Heinz, 83395 Freilassing (DE)
(74) Vertreter: Castell, Klaus

(56) Entgegenhaltungen:
- EP-A- 1 364 764
- US-A- 4 431 397
- US-A- 6 082 989
- PATENT ABSTRACTS OF JAPAN Bd. 1998, Nr. 05, 30. April 1998 (1998-04-30) & JP 10 015966 A (TORAY ENG CO LTD; DOBASHI KIKAI:KK), 20. Januar 1998 (1998-01-20)
- PATENT ABSTRACTS OF JAPAN Bd. 1995, Nr. 03, 28. April 1995 (1995-04-28) & JP 06 335933 A (HITACHI CHEM CO LTD), 6. Dezember 1994 (1994-12-06)

## Beschreibung

Die Erfindung bezieht sich auf ein Verfahren zur Herstellung von Kunststoff-Formfolien, bei dem ein Galvano-Formwerkzeug mittels Heizstrahlern erwärmt und mit einem fließfähigen thermoplastischen Kunststoffpulver beschichtet wird, wobei das Kunststoffpulver durch Schwenken des Formwerkzeuges um mindestens eine Achse verteilt wird und dabei teilweise an der Wand des Formwerkzeuges anschmilzt, worauf das überschüssige Kunststoffpulver entleert, das Formwerkzeug gekühlt und die Kunststoff-Formfolie dem Formwerkzeug entnommen wird. Die Erfindung bezieht sich auch auf eine Vorrichtung zur Durchführung des Verfahrens.

Verfahren und Vorrichtungen zum Herstellen von Kunststoffformfolien sind aus dem Stand der Technik zahlreich bekannt.

In der EP 1 364 764 A2 ist beispielsweise eine Rotationspressmaschine zur Herstellung von Kunststoffteilen gezeigt. Hierbei werden durch Drehen Plastikteile aus geschmolzenem Kunststoff gepresst.

Nach einem anderen Verfahren, dem sogenannten powder-slush Verfahren, wird nicht geschmolzenes Kunststoffpulver gleichmäßig auf einer Form verteilt und dort angeschmolzen. Eine solche Vorrichtung ist aus der US 4,431,397 bekannt. Bei dieser wird das Formwerkzeug durch ein Bestreichen mit warmer Luft erwärmt.

Ein weiteres Verfahren und eine Vorrichtung dieser Art ist aus der WO 03/031139 A1 bekannt. Dort werden zur Erzielung einer möglichst gleichmäßigen Temperaturverteilung beim Formwerkzeug verschiedene Maßnahmen vorgenommen. Eine der Maßnahmen besteht darin, dass der Abstand der Heizstrahler der Form des Formwerkzeuges angepasst wird. Weiterhin kann die Leistung der einzelnen Heizstrahler unterschiedlich eingestellt werden. Schließlich wird die nichtformende Seite des Formwerkzeuges mit unterschiedlichen Farbaufträgen von schwarz bis hellgrau versehen, um die Wärmeadsorptionsmöglichkeit zu verändern, was sich auch auf eine gleichmäßige Dicke der Kunststoff-Formfolie auswirkt. Eine Beschleunigung der Heizzeit ist damit aber nicht zu erreichen.

Aufgabe der Erfindung ist es, eine möglichst gleichmäßige Temperatur des Formwerkzeuges in einer verhältnismäßig kurzen Zeitspanne zu erreichen, ohne einen höheren Aufwand bei der Anordnung der Heizstrahler und der Regelung der Heizleistung in Kauf nehmen zu müssen.

Diese Aufgabe wird bei einem Verfahren der eingangs erläuterten Art erfindungsgemäß dadurch gelöst, dass die gesamte von den Heizstrahlern erwärmte Fläche des Formwerkzeuges von einer, die gesamte Fläche überstreichenden Luftströmung beaufschlagt wird.

Die Luftströmung wird also überall dort eingesetzt, wo Flächen des Formwerkzeuges von Heizstrahlern erwärmt werden.

In manchen Fällen hat es sich als ausreichend herausgestellt, wenn die rückwärtige, nichtformgebende Fläche des Formwerkzeuges mit einer Luftströmung beaufschlagt wird.

Insbesondere wenn die vordere, formgebende Fläche des Formwerkzeuges mit Heizstrahlern beheizt wird, wird auch diese Fläche mit einer Luftströmung in vorteilhafter Weiterausgestaltung der Erfindung beaufschlagt.

Für die Praxis hat es sich als besonders vorteilhaft erwiesen, wenn in weiterer Ausgestaltung der Erfindung die Luftströmung als eine in sich geschlossene Umluftströmung ausgebildet ist.

Durch die Erzeugung einer in sich geschlossenen Umluftströmung wird auch bei einer einfachen Ausgestaltung der Heizvorrichtung, also ohne Anpassung an die Kontur des Formwerkzeuges und auch ohne Regelungsmaßnahmen hinsichtlich der einzelnen Heizstrahler, eine rasche Vergleichmäßigung der Temperatur des Formwerkzeuges erreicht, so dass die Aufheizzeit für das Formwerkzeug wesentlich verkürzt werden kann.

Bei der Erzeugung einer Luftströmung hat es sich als vorteilhaft herausgestellt, wenn die Luftströmung im wesentlichen parallel zur Oberfläche der nichtformenden Fläche des Formwerkzeuges ausgerichtet wird. Hierdurch wird der Temperaturausgleich zwischen den verschiedenen Stellen des Formwerkzeuges in einer wesentlich kürzeren Zeitspanne erreicht, als dies mit den bisherigen Mitteln möglich war.

Je nach Oberflächengestaltung des Formwerkzeuges kann es vorteilhaft sein, die Luftströmung unter einem beliebigen Winkel auf die Fläche des Formwerkzeuges zu richten. Dies hängt damit zusammen, ob besonders abrupte Änderungen der Linienführung in der Oberflächengestaltung einschließlich Hinterschnitte vorhanden sind.

Bei solchen besonders zerklüfteten Ausgestaltungsfällen des Formwerkzeuges kann es vorteilhaft sein, wenn in weiterer Ausgestaltung der Erfindung erwärmte Luft zusätzlich von außen zugeführt wird.

Um den verschiedensten Formgebungen des Formwerkzeuges besser Rechnung zu tragen, kann die Luftströmung an unterschiedlichen Stellen unterschiedlich beschleunigt und mit unterschiedlichen Turbulenzen versehen werden. Durch diese Maßnahme wird der Wärmeübergang zwischen der bewegten Luft und dem Formwerkzeug erhöht, was zu einer Herabsetzung der Aufheizzeit führt, da die Vergleichmäßigung der Temperatur des Formwerkzeuges an den unterschiedlichsten Stellen schneller erreicht wird.

Mit den oben beschriebenen Maßnahmen ist sichergestellt, dass an allen Stellen des Formwerkzeuges unabhängig von der Formgebung nahezu die gleichen Temperaturverhältnisse vorliegen, so dass ein gleichmäßiges Anschmelzen des Kunststoffpulvers an dem Formwerkzeug erfolgen kann, was zu einer gleichmäßigen Dicke der Kunststoff-Formfolie führt.

Der Zeitpunkt für die Erzeugung einer Luftströmung und die Dauer dieser Luftströmung hängt von der Ausgestaltung des Formwerkzeuges und des verwendeten Kunststoffpulvers ab, welches zum Schmelzen gebracht werden soll.

Die Beheizung des Formwerkzeuges kann in weiterer Ausgestaltung der Erfindung mit an sich bekannten Heizstrahlern erfolgen, die einzeln oder in Gruppen in ihrer Leistungsaufnahme regelbar sind.

Die Vorrichtung zur Durchführung des Verfahrens mit einem einseitig offenen, eine Heizeinrichtung aufweisenden und durch das Formwerkzeug abschließbaren Gehäuse, ist dadurch gekennzeichnet, dass mindestens eine Vorrichtung zur Erzeugung einer Luftströmung an mindestens einer Seite des Formwerkzeuges vorgesehen ist. Die Vorrichtung zur Erzeugung einer Luftströmung kann dabei ein Axialgebläse oder ein Radialgebläse sein.

Um eine besonders gute Wärmeübertragung zwischen der Umluft und dem Formwerkzeug herbeizuführen und damit die Zeitspanne bis zur annähernden Vergleichmäßigung der Temperatur des Formwerkzeuges zu verkürzen, ist in weiterer Ausgestaltung der Erfindung vorgesehen, dass sowohl mindestens ein Axialgebläse als auch mindestens ein Radialgebläse vorgesehen sind.

Eine weitere Möglichkeit den Wärmeübergang zwischen der Luft und dem Formwerkzeug zu beeinflussen besteht darin, dass bei Anordnung von mehr als zwei Gebläsen, diese gleichen oder unterschiedlichen Abstand zum Formwerkzeug aufweisen. Hierdurch kann die Luftströmung und damit der Wärmeübergang den unterschiedlichsten Formgebungen des Formwerkzeuges angepasst werden.

Eine weitere Möglichkeit zur Beeinflussung des Wärmeüberganges zwischen Luftströmung und Formwerkzeug besteht darin, dass im Strömungsweg der Luftströmung Leitbleche und/oder Prallbleche angeordnet sind. Hierdurch ist es möglich, die Luftströmung an bestimmte Stellen in besonders hohem Maße zu leiten und Turbulenzen zu erzeugen, die den Wärmeübergang wesentlich verbessern.

In vorteilhafter weiterer Ausgestaltung ist bei Anordnung von Heizstrahlern zu beiden Seiten des Formwerkzeuges die Anordnung so getroffen, dass die Summe der Abstände der Heizstrahler von dem Formwerkzeug über die Ausdehnung desselben, das heißt nach allen Richtungen, im wesentlichen konstant bleibt.

Die Erfindung wird nachfolgend anhand von zwei Ausführungsbeispielen einer Vorrichtung zur Durchführung des Verfahrens näher erläutert. In der Zeichnung zeigen:
- **Figur 1**:: ein Querschnitt durch eine Vorrichtung zur Herstellung von Kunststoff-Formfolien;
- **Figur 2:**: eine Ansicht in Richtung der Linie II - II in Figur 1;
- **Figur 3**:: eine der Figur 2 entsprechende Darstellung einer abgeänderten Vorrichtung;
- **Figur 4**:: ein Diagramm eines Temperaturverlaufes bei einem Formwerkzeug ohne Umluftströmung; und
- **Figur 5**:: ein Diagramm eines Temperaturverlaufes bei einer Vorrichtung gemäß der Erfindung.

In einem nach oben offenen Gehäuse 1 sind entlang der Innenwand mehrere Heizstrahler 2 angeordnet, die zur Aufheizung eines das Gehäuse abschließenden Galvano-Formwerkzeuges 3 dient. Oberhalb des Formwerkzeuges ist ein Träger 4 für weitere Heizstrahler 5 vorgesehen. Innerhalb des durch das Formwerkzeug 3 abgeschlossenen Raumes des Gehäuses 1 sind zwei Axialgebläse 6 und 7 mit unterschiedlichem Abstand zum Formwerkzeug vorgesehen. Mit diesen Gebläsen ist die Erzeugung einer Umluftströmung gewährleistet, die durch die Pfeile 8 angedeutet ist. Solche Gebläse können auch unterhalb des Trägers 4, der deckelartig ausgeführt sein kann, vorgesehen sein.

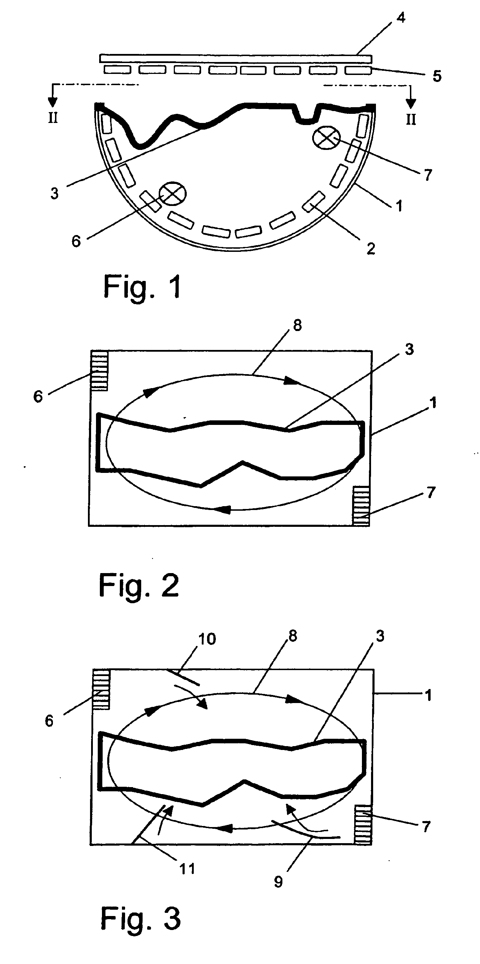

Bei der Ausführungsform nach Figur 3 liegen im wesentlichen die gleichen Verhältnisse wie bei der Vorrichtung gemäß Figur 2 vor, jedoch sind in den Weg der Umluftströmung 8 Leitbleche 9, 10 und Prallbleche 11 eingesetzt, von denen nur ein Prallblech dargestellt ist. Hierdurch ist es möglich, einen Teil der Umluftströmung 8 an besonders kritische Stellen des Formwerkzeuges zu leiten, um damit den Wärmeübergang zwischen Umluftströmung 8 und Formwerkzeug 3 zu beeinflussen, in dem Sinne, dass eine möglichst rasche Vergleichmäßigung der Temperatur des Formwerkzeuges 3 eintritt.

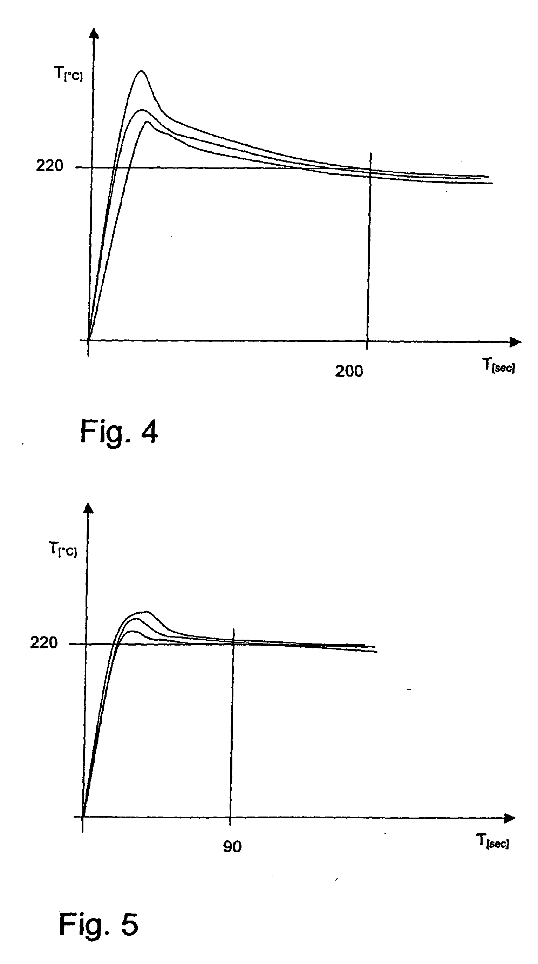

Figur 4 zeigt ein Diagramm eines Temperaturverlaufes an drei verschiedenen Stellen des Formwerkzeuges, wobei die Temperatur über der Zeit aufgetragen ist. Hier ist erkennbar, dass die Temperatur von ca. 220°C nach ca. 200 Sekunden erreicht wurde und zwar bei einer Vorrichtung ohne Umluftströmung. Die Temperatur von ca. 220°C ist notwendig, um das in das Formwerkzeug eingebrachte Kunststoffpulver zum Schmelzen zu bringen.

Figur 5 zeigt den Temperaturverlauf bei Anwendung einer Umluftströmung gemäß der Erfindung. Hier ist zu sehen, dass die Temperatur von ca. 220°C bereits nach ca. 90 Sekunden erreicht wurde, wobei der Temperaturunterschied zwischen den einzelnen Messstellen praktisch vernachlässigbar klein ist.

## Patentansprüche

1. Verfahren zur Herstellung von Kunststoff-Formfolien, bei welchem ein Galvano-Formwerkzeug (3) mittels Heizstrahlern (2) erwärmt und mit einem fließfähigen thermoplastischen Kunststoffpulver beschichtet wird, wobei das Kunststoffpulver durch Schwenken des Formwerkzeugs (3) um mindestens eine Achse verteilt wird und dabei teilweise an einer Wand des Formwerkzeugs (3) anschmilzt, woraufhin überschüssiges Kunststoffpulver entleert, das Formwerkzeug (3) gekühlt und die Kunststoff-Formfolie dem Formwerkzeug (3) entnommen wird, ***dadurch gekennzeichnet, dass*** die gesamte von den Heizstrahlern (2) erwärmte Fläche des Formwerkzeugs (3) von einer die gesamte Fläche überstreichenden, in sich geschlossenen Luftströmung (8) beaufschlagt wird.

2. Verfahren nach Anspruch 1, ***dadurch gekennzeichnet, dass*** eine rückwärtige, nicht formgebende Fläche des Formwerkzeugs (3) mit einer Luftströmung (8) beaufschlagt wird.

3. Verfahren nach Anspruch 1 oder 2, ***dadurch gekennzeichnet, dass*** die vordere, formgebende Fläche des Formwerkzeugs (3) mit einer Luftströmung (8) beaufschlagt wird.

4. Verfahren nach einem der vorhergehenden Ansprüche, ***dadurch gekennzeichnet, dass*** die Luftströmung (8) im Wesentlichen parallel zu einer Oberfläche des Formwerkzeugs (3) ausgerichtet wird.

5. Verfahren nach einem der vorhergehenden Ansprüche, ***dadurch gekennzeichnet, dass*** die erwärmte Luft zusätzlich von außen zugeführt wird.

6. Verfahren nach einem der vorhergehenden Ansprüche, ***dadurch gekennzeichnet, dass*** die Luftströmung (8) an unterschiedlichen Stellen unterschiedlich beschleunigt und mit unterschiedlichen Turbulenzen versehen wird.

7. Verfahren nach einem der vorhergehenden Ansprüche, ***dadurch gekennzeichnet, dass*** die Beheizung mit Heizstrahlern (2) erfolgt, welche einzeln oder in Gruppen in ihrer Leistungsaufnahme regelbar sind.

8. Vorrichtung zum Durchführen des Verfahrens nach einem der vorhergehenden Ansprüche, mit einem einseitig offenen, eine Heizeinrichtung aufweisenden und durch ein Formwerkzeug (3) abschließbaren Gehäuse (1), ***dadurch gekennzeichnet, dass*** mindestens eine Vorrichtung (6, 7) zum Erzeugen einer Luftströmung (8) an mindestens einer Seite des Formwerkzeugs (3) zusätzlich zu Heizstrahlern (2) vorgesehen ist.

9. Vorrichtung nach Anspruch 8, ***dadurch gekennzeichnet, dass*** als Vorrichtung (6, 7) zum Erzeugen einer Luftströmung ein Axialgebläse (6) vorgesehen ist.

10. Vorrichtung nach Anspruch 8, ***dadurch gekennzeichnet, dass*** als Vorrichtung (6, 7) zum Erzeugen einer Luftströmung (8) ein Radialgebläse (7) vorgesehen ist.

11. Vorrichtung nach einem der Ansprüche 8 bis 10, ***dadurch gekennzeichnet, dass*** mindestens ein Axialgebläse (6) und mindestens ein Radialgebläse (7) vorgesehen sind.

12. Vorrichtung nach einem der Ansprüche 8 bis 11, ***dadurch gekennzeichnet, dass*** in einem Strömungsweg der Luftströmung (8) Leitbleche (9, 10) und/oder Prallbleche (11) angeordnet sind.

## Claims

1. A method for manufacturing molded plastic foils in which a galvanoform (3) is heated by means of radiant heaters (2) and is coated with a pourable thermoplastic synthetic powder, the synthetic powder being dispersed by pivoting the form (3) around at least one axis and thereby partially fuses with a wall of the form (3), whereupon the surplus synthetic powder is emptied, the form (3) is cooled and the molded plastic foil is removed from the form (3), **characterized in that** the entire surface of the form (3) heated by the radiant heaters (2) is exposed to a self-contained air flow (8) flowing over the entire surface.

2. The method according to claim 1, **characterized in that** a rearward non-forming surface of the form (3) is exposed to an air flow (8).

3. The method according to claim 1 or 2, **characterized in that** the front forming surface of the form (3) is exposed to an air flow (8).

4. The method according to one of the afore-mentioned claims, **characterized in that** the air flow (8) is substantially oriented parallel to a surface of the form (3).

5. The method according to one of the afore-mentioned claims, **characterized in that** the heated air is additionally supplied from the outside.

6. The method according to one of the afore-mentioned claims, **characterized in that** the air flow (8) is accelerated differently in different places and is provided with different turbulences.

7. The method according to one of the afore-mentioned claims, **characterized in that** the heating is carried out by radiant heaters (2) which are adjustable separately or in groups with respect to their power input.

8. A device for implementing the method according to one of the afore-mentioned claims with a casing (1) open on one side having a heating arrangement and closable by a form (3), **characterized in that** at least one device (6, 7) for generating an air flow (8) is provided on at least one side of the form (3) additionally to the radiant heaters (2).

9. The device according to claim 8, **characterized in that** an axial blower (6) is provided as a device (6, 7) for generating an air flow.

10. The device according to claim 8, **characterized in that** a radial blower (7) is provided as a device (6, 7) for generating an air flow (8).

11. The device according to one of the claims 8 to 10, **characterized in that** at least one axial blower (6) and at least one radial blower (7) is provided.

12. The device according to one of the claims 8 to 11, **characterized in that** guide plates (9, 10) and/or impact plates (11) are disposed in a flow path of the air flow (8).

## Revendications

1. Méthode pour la fabrication de films en plastique moulés, par laquelle un moule galvanoplastique (3) est chauffé au moyen de chauffages (2) et est recouvert d'une poudre de plastique thermoplastique fluide, la poudre de plastique étant répartie en pivotant le moule (3) autour d'au moins un axe et fondant partiellement sur une paroi du moule (3), après quoi la poudre de plastique excédentaire est vidée, le moule (3) est refroidi et le film en plastique moulé est retiré du moule (3), **caractérisée en ce que** toute la surface du moule (3) chauffée par les chauffages (2) est soumise à un courant d'air (8) fermé soufflant sur toute la surface.

2. Méthode selon la revendication 1, **caractérisée en ce qu'**une surface arrière non formatrice du moule (3) est soumise à un courant d'air (8).

3. Méthode selon les revendications 1 ou 2, **caractérisée en ce qu'**une surface avant formatrice du moule (3) est soumise à un courant d'air (8).

4. Méthode selon l'une quelconque des revendications précédentes, **caractérisée en ce que** le courant d'air (8) est essentiellement orienté parallèlement à une surface du moule (3).

5. Méthode selon l'une quelconque des revendications précédentes, **caractérisée en ce que** l'air chauffé est en outre apporté de l'extérieur.

6. Méthode selon l'une quelconque des revendications précédentes, **caractérisée en ce que** le courant d'air (8) est accéléré différemment en différents endroits et est assorti de turbulences différentes.

7. Méthode selon l'une quelconque des revendications précédentes, **caractérisée en ce que** le chauffage se fait à l'aide de chauffages (2) dont la puissance absorbée est réglable individuellement ou en groupe.

8. Dispositif pour mettre en oeuvre la méthode selon l'une quelconque des revendications précédentes, avec un boîtier (1) ouvert d'un côté, comportant un dispositif de chauffage et pouvant être fermé par un moule (3), **caractérisé en ce qu'**au moins un dispositif (6, 7) pour générer un courant d'air (8) est prévu sur au moins un côté du moule (3) en plus des chauffages (2).

9. Dispositif selon la revendication 8, **caractérisé en ce qu'**un souffleur axial (6) est prévu en tant que dispositif (6, 7) pour générer un courant d'air.

10. Dispositif selon la revendication 8, **caractérisé en ce qu'**un souffleur radial (7) est prévu en tant que dispositif (6, 7) pour générer un courant d'air (8).

11. Dispositif selon l'une quelconque des revendications 8 à 10, **caractérisé en ce qu'**au moins un souffleur axial (6) et au moins un souffleur radial (7) sont prévus.

12. Dispositif selon l'une quelconque des revendications 8 à 11, **caractérisé en ce que** des tôles de guidage (9, 10) et/ou des déflecteurs (11) sont disposés dans le courant du courant d'air (8).
